# FASCICULE DE BREVET EUROPEEN

(11) **EP 0 982 846 B1**
(45) Date de publication et mention de la délivrance du brevet: **19.10.2011**
(21) Numéro de dépôt: 98115990.8
(22) Date de dépôt: 25.08.1998
(51) Int. Cl.: H02P 8/02, G04C 3/14, H02P 8/34

(54) **Procédé et dispositif de commande d'un moteur pas à pas**
Verfahren und Vorrichtung zur Regelung eines Schrittmotors
Process and device for controlling a stepper motor

(43) Date de publication de la demande: 01.03.2000
(73) Titulaire: ETA SA Manufacture Horlogère Suisse, 2540 Grenchen (CH)
(72) Inventeur: Guérin, Yves, 68300 St-Louis (FR); Bugmann, Rudolf, 3235 Erlach (CH)
(74) Mandataire: Balsters, Robert

(56) Documents cités:
- GB-A- 2 026 216
- GB-A- 2 067 795
- US-A- 4 212 156
- US-A- 4 518 906

## Description

La présente invention a pour objet un procédé de commande d'un moteur pas à pas ayant un rotor muni d'un aimant permanent, une bobine et un stator pour coupler magnétiquement ladite bobine et ledit aimant, comportant :
- l'application à ladite bobine d'impulsions motrices successives ayant en absence de pas manqué alternativement une première polarité et une deuxième polarité opposée à ladite première polarité, et la fourniture à ladite bobine d'une quantité d'énergie électrique déterminée pendant chacune desdites impulsions motrices;
- la détection, après chacune desdites impulsions motrices, de la rotation ou de la non-rotation dudit rotor en réponse à cette impulsion motrice;
- dans le cas de la détection d'une non-rotation du rotor, l'application d'une impulsion de rattrapage ayant la même polarité que l'impulsion motrice précédente en réponse à laquelle le rotor n'a pas tournée; et
- le réglage de ladite quantité d'énergie en dépendance de ladite détection.

La présente invention a également pour objet un dispositif pour la mise en oeuvre de ce procédé, c'est-à-dire un dispositif de commande d'un moteur pas à pas ayant un rotor muni d'un aimant permanent, une bobine et un stator pour coupler magnétiquement ladite bobine et ledit aimant, ledit dispositif comportant :
- des moyens générateurs d'impulsions motrices pour appliquer à ladite bobine des impulsions motrices successives ayant en absence de pas manqué alternativement une première polarité et une deuxième polarité opposée à ladite première polarité et pour fournir à ladite bobine une quantité d'énergie électrique déterminée pendant chacune desdites impulsions motrices;
- des moyens de détection pour fournir, après chacune desdites impulsions motrices, un signal de détection représentatif de la rotation ou de la non-rotation dudit rotor en réponse à cette impulsion motrice;
- des moyens de réglage répondant audit signal de détection pour régler ladite quantité d'énergie électrique;
- des moyens de commande pour fournir, dans le cas d'une detection de non-rotation dudit rotor, une impulsion de rattrapage ayant la même polarité que l'impulsion motrice précédente en réponse à laquelle le rotor n'a pas tourné.

Un tel procédé et un tel dispositif, qui sont notamment décrits dans le brevet US-A-4,212,156 sont destinés à permettre la diminution de la quantité totale d'énergie électrique consommée par un moteur pas à pas. Une telle diminution est notamment souhaitable lorsque ce moteur pas à pas est utilisé dans un appareil portable et/ou de faible volume, une pièce d'horlogerie électronique par exemple. Cette diminution de la consommation du moteur pas à pas permet en effet, toutes autres choses étant égales, d'augmenter la durée de vie de la source d'énergie électrique, généralement constituée par une pile, qui alimente cet appareil, ou de diminuer le volume occupé par cette source.

Pour permettre de diminuer la quantité d'énergie électrique consommée par le moteur pas à pas, le procédé connu mentionné ci-dessus consiste, lorsque le rotor du moteur a tourné correctement en réponse à un certain nombre d'impulsions motrices, à diminuer la quantité d'énergie électrique qui sera fournie à la bobine de ce moteur pendant les impulsions motrices suivantes. En outre, ce procédé consiste, lorsque le rotor du moteur n'a pas tourné correctement en réponse à une impulsion motrice, à appliquer à la bobine de ce moteur une impulsion de rattrapage pendant laquelle la quantité d'énergie électrique fournie à la bobine est suffisante pour que le rotor effectue le pas qu'il vient de rater, et à augmenter jusqu'à un maximum la quantité d'énergie électrique qui sera fournie à la bobine pendant les impulsions motrices suivantes.

Il en résulte que si le rotor du moteur n'a pas tourné en réponse à une impulsion motrice pour une raison quelconque, la quantité d'énergie électrique fournie à la bobine du moteur pendant l'impulsion motrice suivante a obligatoirement sa valeur maximale.

On voit que ce procédé connu permet en principe de rapprocher la quantité d'énergie électrique effectivement fournie à la bobine du moteur de sa valeur minimale, c'est-à-dire de la valeur de l'énergie électrique qu'il faut au moins fournir à cette bobine pour que ce rotor tourne correctement.

On sait bien cependant qu'il est obligatoire d'admettre certaines tolérances de dimensionnement et/ou de positionnement lors de la fabrication et de l'assemblage des divers composants d'un moteur pas à pas.

Ainsi, par exemple, il arrive que l'axe d'aimantation de l'aimant du rotor d'un tel moteur ne coupe pas l'axe de rotation de ce rotor. De même cet axe de rotation ne coïncide pas toujours exactement avec l'axe de l'ouverture du stator dans laquelle est situé l'aimant du rotor, ni d'ailleurs avec l'axe du cylindre formé par cet aimant.

Dans de tels cas, la variation du couple de positionnement auquel est soumis le rotor du moteur pas à pas en fonction de sa position angulaire est différente selon le pas que ce rotor effectue.

Il arrive aussi que l'axe d'aimantation de l'aimant du rotor d'un moteur pas à pas ne soit pas exactement perpendiculaire à l'axe du cylindre formé par cet aimant. Dans un tel cas, l'un des pôles magnétiques de cet aimant est évidemment plus proche de l'une des faces terminales de ce cylindre que de l'autre, le deuxième de ces pôles magnétiques étant alors plus proche de cette autre face terminale que de la première.

Dans un tel cas, la présence d'une pièce en un matériau ferromagnétique, par exemple la roue dentée qui engrène avec le pignon du rotor, en regard et à proximité d'une partie de l'une des faces terminales du rotor a également pour effet que la variation du couple de positionnement appliqué à ce rotor est différente selon le pas que ce dernier effectue.

Il arrive aussi qu'un moteur pas à pas soit soumis à un champ magnétique extérieur continu. Dans un tel cas, la variation du couple de positionnement appliqué au rotor de ce moteur est également différente selon le pas que ce rotor effectue.

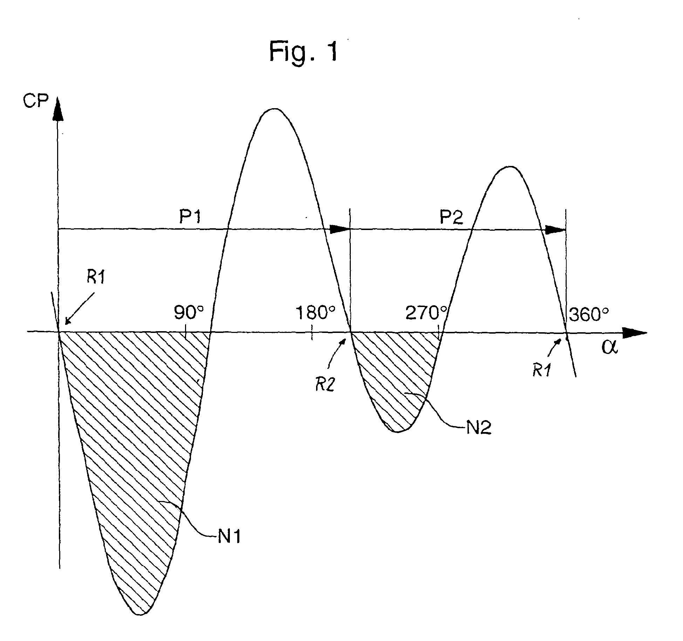

La figure 1 représente un exemple de la variation du couple de positionnement CP auquel est soumis le rotor d'un moteur pas à pas dans l'un et/ou l'autre des cas mentionnés ci-dessus en fonction de la position angulaire α de ce rotor.

Dans cette figure 1, les deux positions de repos stable du rotor sont respectivement désignées par R1 et R2. En outre, les pas que ce rotor effectue lorsqu'il tourne de la position R1 à la position R2 et de la position R2 à la position R1 sont respectivement désignés par P1 et P2.

L'homme du métier sait bien que les impulsions motrices destinées à faire effectuer au rotor du moteur un pas P1 et celles qui sont destinées à faire effectuer à ce rotor un pas P2 doivent avoir des polarités opposées. Dans la suite de cette description, ces impulsions motrices seront respectivement et arbitrairement qualifiées de positives et de négatives.

On remarque dans la figure 1 que les positions R1 et R2 de repos stable du rotor du moteur ne sont pas exactement diamétralement opposées, le rotor tournant de plus de 180° lorsqu'il effectue son pas P1 et de moins de 180° lorsqu'il effectue son pas P2.

Mais on remarque surtout que la surface délimitée par l'axe α et la courbe représentant la partie négative du couple de positionnement CP, c'est-à-dire la partie de ce couple CP où celui-ci s'oppose à la rotation du rotor, est nettement plus importante, dans cet exemple, lorsque ce rotor effectue son pas P1 que lorsqu'il effectue son pas P2.

Dans la figure 1, ces deux surfaces sont hachurées et respectivement désignées par N1 et N2.

Or l'homme du métier sait bien que, dans de très nombreux cas et notamment lorsqu'un moteur pas à pas est utilisé dans une pièce d'horlogerie, la quantité minimale d'énergie électrique qu'il faut fournir à la bobine de ce moteur pour que son rotor effectue un pas dépend presque exclusivement, la plupart du temps, de la grandeur de cette surface.

Dans le présent exemple, cette quantité minimale d'énergie électrique est donc, dans tous ces cas et la plupart du temps, nettement plus élevée lorsque le rotor du moteur pas à pas doit effectuer un pas P1 que lorsqu'il doit effectuer un pas P2.

On voit que lorsqu'un tel moteur est commandé selon le procédé connu décrit ci-dessus, la quantité d'énergie électrique fournie à sa bobine pendant chaque impulsion motrice ne peut pas devenir inférieure à celle qui est nécessaire pour que le rotor de ce moteur effectue correctement ses pas P1 en réponse aux impulsions motrices positives. Il en résulte que la quantité d'énergie électrique fournie à la bobine de ce moteur pendant chacune des impulsions motrices négatives est toujours nettement supérieure à celle qui est nécessaire pour que le rotor du moteur effectue correctement ses pas P2. La quantité d'énergie électrique fournie en trop à la bobine du moteur pendant chaque impulsion motrice négative est évidemment dissipée en pure perte.

Il arrive aussi que la raison pour laquelle le rotor du moteur n'a pas tourné en réponse à une impulsion motrice n'existe plus au moment où l'impulsion motrice suivante est appliquée à la bobine.

Ainsi, par exemple, le rotor du moteur peut ne pas tourner en réponse à une impulsion motrice à cause d'un choc subi par le moteur pendant cette impulsion motrice.

Toujours par exemple, le rotor du moteur peut également ne pas tourner en réponse à une impulsion motrice à cause d'un défaut de l'une des roues du train d'engrenages entraîné par ce rotor. Selon la position de cette roue dans ce train d'engrenages, ce défaut peut ne provoquer à nouveau cette non-rotation du rotor qu'après qu'un assez grand nombre d'impulsions motrices ont été appliquées à la bobine.

Dans tous ces cas également, la quantité d'énergie électrique fournie à la bobine du moteur pendant les impulsions motrices suivant celle en réponse à laquelle le rotor n'a pas tourné et ayant la polarité opposée à la polarité de cette dernière est inutilement élevée, une partie importante de cette énergie électrique étant alors aussi dissipée en pure perte.

Le procédé connu décrit ci-dessus, ainsi bien entendu que tout dispositif mettant en oeuvre ce procédé, ne permet donc pas de diminuer la quantité d'énergie électrique consommée par un moteur pas à pas autant que cela serait souhaitable.

Un but de la présente invention est donc de proposer un procédé de commande d'un moteur pas à pas qui permet de diminuer la quantité d'énergie électrique consommée par ce moteur pas à pas encore plus que ne le permet le procédé connu décrit ci-dessus.

Ce but est atteint par le procédé de la revendication 1.

Un autre but de la présente invention est de proposer un dispositif pour mettre en oeuvre le procédé de la revendication 1.

Ce but est atteint par le dispositif dont les caractéristiques sont énumérées dans la revendication 2.

D'autres buts et avantages de la présente invention seront rendus évidents par la description qui va être faite ci-après à l'aide du dessin annexé dans lequel :
- la figure 1, déjà mentionnée, montre un exemple de la variation du couple de positionnement auquel est soumis, dans de nombreux cas, le rotor d'un moteur pas à pas en fonction de la position angulaire de ce rotor; et
- la figure 2 représente schématiquement et à titre d'exemple non limitatif une forme d'exécution du dispositif selon la présente invention.

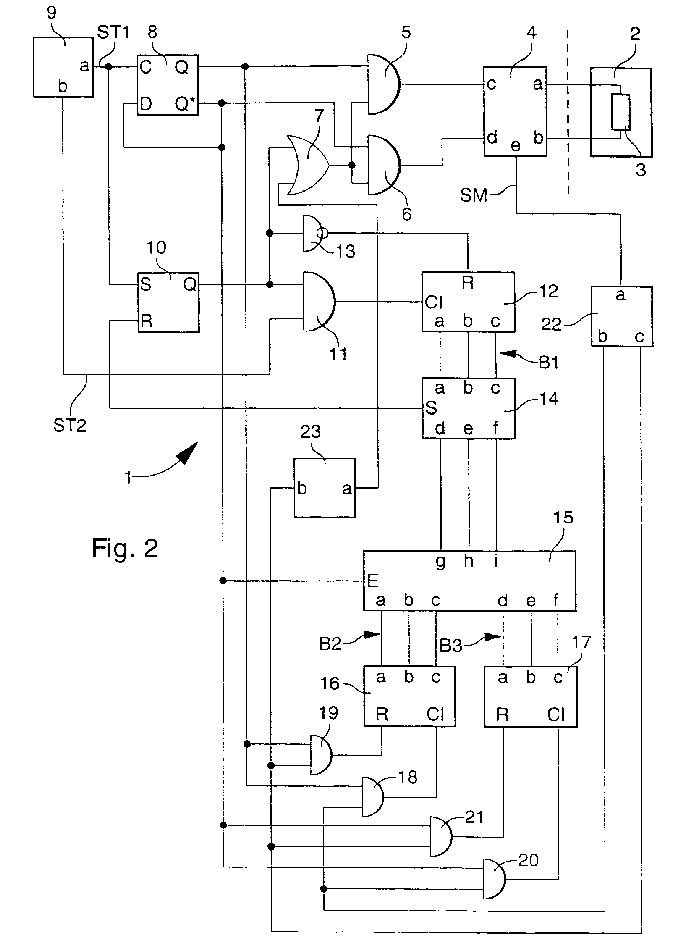

Dans sa forme d'exécution représentée à la figure 2, le dispositif selon la présente invention, désigné par la référence générale 1, est destiné à être utilisé dans une pièce d'horlogerie électronique ayant des éléments d'affichage horaire mécaniques, par exemple des aiguilles, pour commander le moteur pas à pas qui entraîne ces éléments.

Ce moteur pas à pas, qui a également été représenté schématiquement à la figure 2 avec la référence 2, comporte dans cet exemple une seule bobine, un rotor ayant un aimant permanent bipolaire, un stator couplant magnétiquement la bobine et l'aimant du rotor, et des moyens qui soumettent ce dernier à un couple de positionnement qui tend à le maintenir ou à le ramener dans l'une ou l'autre de deux positions de repos stables. Seule la bobine du moteur 2 a été représentée, avec la référence 3.

L'homme du métier comprendra cependant facilement que la présente invention n'est pas limitée à la commande d'un moteur pas à pas de ce genre, mais qu'elle peut être utilisée pour commander un moteur pas à pas de n'importe quel autre genre, quels que soient le nombre de ses bobines, le nombre de pôles magnétiques de l'aimant permanent de son rotor et le nombre de positions de repos stable de ce dernier. L'homme du métier verra également que la présente invention n'est pas non plus limitée à la commande du moteur pas à pas d'une pièce d'horlogerie, mais qu'elle peut être utilisée pour commander un moteur pas à pas faisant partie de n'importe quel autre genre d'appareil.

L'homme du métier sait bien que, pour commander un moteur pas à pas du genre décrit ci-dessus, il faut appliquer à sa bobine des impulsions motrices ayant alternativement une première polarité et une deuxième polarité opposée à la première, ces impulsions motrices étant, selon les cas, du genre dit à tension constante ou du genre dit à courant constant.

Comme ci-dessus, les impulsions motrices ayant la première polarité et les impulsions motrices ayant la deuxième polarité seront arbitrairement qualifiées de positives et, respectivement, de négatives dans la suite de cette description.

Le dispositif 1 comporte un amplificateur 4 qui ne sera pas décrit en détail car il s'agit d'un circuit bien connu.

On mentionnera simplement que l'amplificateur 4 comporte deux sorties 4a et 4b reliées chacune à l'une des bornes de la bobine 3. L'amplificateur 4 comporte en outre deux entrées 4c et 4d, et il est agencé, dans cet exemple, de manière à fournir à la bobine 3 une impulsion motrice positive à tension constante tant que son entrée 4c est à l'état logique "1" et une impulsion motrice négative également à tension constante tant que son entrée 4d est à l'état logique "1". L'amplificateur 4 est en outre agencé de manière à court-circuiter la bobine 3 tant que ses entrées 4c et 4d sont toutes deux à l'état logique "0", c'est-à-dire dès la fin d'une impulsion motrice et jusqu'au début de l'impulsion motrice suivante.

L'amplificateur 4 comporte en outre une sortie 4e, et il est agencé de manière à fournir à cette sortie 4e un signal de mesure SM représentatif de l'intensité du courant qui passe encore dans la bobine 3 après qu'elle a été mise en court-circuit à la fin d'une impulsion motrice.

Les entrées 4c et 4d de l'amplificateur 4 sont respectivement reliées à la sortie d'une porte ET 5 et à la sortie d'une porte ET 6, ces portes 5 et 6 ayant toutes deux une entrée reliée à la sortie d'une porte OU 7.

Les deuxièmes entrées des portes 5 et 6 sont respectivement reliées à la sortie directe Q et à la sortie inverse Q* d'un flip-flop 8 de type D.

Le flip-flop 8 a une entrée d'horloge Cl qui est reliée à la sortie 9a d'un circuit base de temps 9 et une entrée d'information D qui est également reliée à sa sortie inverse Q*.

La base de temps 9 ne sera pas décrite en détail car il s'agit d'un circuit bien connu. On mentionnera simplement que, dans cet exemple, elle est agencée de manière à fournir, à sa sortie 9a, un signal périodique ST1 constitué par des impulsions ayant une fréquence de 1 Hz. On mentionnera également que la base de temps 9 comporte une deuxième sortie 9b, qui fournit, toujours dans cet exemple, un autre signal périodique, ST2, constitué par des impulsions ayant une fréquence de 1024 Hz.

La sortie 9a de la base de temps 9 est également reliée à l'entrée de commande S d'un flip-flop 10 de type R-S dont la sortie directe Q est reliée à une première entrée d'une porte ET 11 et à une première entrée de la porte 7. La deuxième entrée de la porte 11 est reliée à la sortie 9b de la base de temps 9, et la sortie de cette porte 11 est reliée à l'entrée d'horloge Cl d'un compteur 12.

Le compteur 12 est constitué de trois flip-flops, non représentés séparément, qui sont connectés de manière classique et dont les sorties directes forment les sorties 12a, 12b et 12c du compteur 12.

Le compteur 12 comporte encore une entrée de remise à zéro R qui est reliée à la sortie Q du flip-flop 10 par l'intermédiaire d'un inverseur 13.

Toujours de manière classique, les trois sorties 12a, 12b et 12c du compteur 12 sont maintenues à l'état logique "0" tant que l'entrée R de ce compteur 12 est à l'état logique "1", c'est-à-dire tant que la sortie Q du flip-flop 10 est à l'état logique "0".

De même, lorsque l'entrée R du compteur 12 est à l'état logique "0", le nombre binaire formé par les états logiques "0" ou "1" des sorties 12a, 12b et 12c augmente d'une unité en réponse à chaque impulsion fournie à l'entrée Cl de ce compteur 12, d'une manière qui sera précisée plus loin, par la sortie de la porte 11. Ce nombre binaire, qui sera désigné par B1, peut donc varier de 000 à 111.

Le dispositif 1 comporte encore un comparateur binaire 14 ayant trois premières entrées 14a, 14b et 14c respectivement reliées aux sorties 12a, 12b et 12c du compteur 12. Ce comparateur 14 comporte encore trois deuxièmes entrées 14d, 14e et 14f, ainsi qu'une sortie S qui est reliée à l'entrée de remise à zéro R du flip-flop 10.

Le comparateur 14 ne sera pas décrit en détail car il s'agit d'un circuit bien connu. On mentionnera simplement que sa sortie S ne prend l'état logique "1" que lorsque les deux nombres binaires formés par les états logiques "0" ou "1" de ses entrées 14a, 14b et 14c d'une part et de ses entrées 14d, 14e et 14f d'autre part sont égaux. Dans tous les autres cas, cette sortie du comparateur 14 est à l'état logique "0".

Le dispositif 1 comporte également un commutateur 15 ayant trois premières entrées 15a, 15b et 15c, trois deuxièmes entrées 15d, 15e et 15f, trois sorties 15g, 15h et 15i respectivement reliées aux entrées 14d, 14e et 14f du comparateur 14, et une entrée de commande E reliée à la sortie inverse Q* du flip-flop 28.

Le commutateur 15 ne sera pas non plus décrit en détail ici car il s'agit également d'un circuit bien connu. On mentionnera simplement qu'il est agencé de manière à relier ses sorties 15g, 15h et 15i à ses premières entrées 15a, 15b et 15c ou à ses deuxièmes entrées 15d, 15e et 15f selon que son entrée E est à l'état logique "0" ou à l'état logique "1".

Le dispositif 1 comporte en outre un compteur 16 ayant trois sorties 16a, 16b et 16c respectivement reliées aux entrées 15a, 15b et 15c du commutateur 15, ainsi qu'un compteur 17 ayant trois sorties 17a, 17b et 17c respectivement reliées aux entrées 15d, 15e et 15f de ce commutateur 15. Chacun des compteurs 16 et 17 comporte en outre une entrée d'horloge Cl et une entrée de remise à zéro R.

Les compteurs 16 et 17 sont identiques et sont constitués chacun de cinq flip-flops, non représentés séparément, qui sont connectés en cascade de manière classique. Cependant, ce sont les sorties inverses des trois derniers flip-flops de ces compteurs 16 et 17 qui constituent leurs sorties 16a à 16c, respectivement 17a à 17c.

Il en résulte d'une part que, lorsque l'entrée R du compteur 16 ou l'entrée R du compteur 17 est à l'état "1", les états logiques des sorties 16a à 16c, respectivement 17a à 17c, forment le nombre binaire 111 qui correspond, comme chacun le sait, au chiffre décimal 7.

Il en résulte d'autre part que, lorsque l'entrée R du compteur 16 est à l'état logique "0", il faut que l'entrée Cl de ce compteur 16 reçoive quatre impulsions successives pour que le nombre binaire formé par les états logiques "0" ou "1" de ses sorties 16a à 16c diminue d'une unité. Ce nombre binaire sera désigné par B2.

De même, lorsque l'entrée R du compteur 17 est à l'état logique "0", il faut que l'entrée Cl de ce compteur 17 reçoive quatre impulsions successives pour que le nombre binaire formé par les états logiques "0" ou "1" de ses sorties 17a à 17c diminue d'une unité. Ce nombre binaire sera désigné par B3.

Pour une raison que l'homme du métier comprendra facilement, les compteurs 16 et 17 sont en outre agencés de manière que les nombres binaires B2 et B3 ne puissent pas devenir inférieurs à une valeur minimale déterminée, par exemple 011. Ces nombres binaires B2 et B3 peuvent donc varier, dans des circonstances qui seront décrites plus loin, de 111 à 011 soit, en numération décimale, de 7 à 3.

L'entrée d'horloge Cl et l'entrée de remise à zéro R du compteur 16 sont respectivement reliées à la sortie d'une porte ET 18 et à la sortie d'une porte ET 19 ayant chacune une première entrée reliée à la sortie directe Q du flip-flop 8. En outre, l'entrée d'horloge Cl et l'entrée de remise à zéro R du compteur 17 sont respectivement reliées à la sortie d'une porte ET 20 et à la sortie d'une porte ET 21, ces deux portes 20 et 21 ayant chacune une première entrée reliée à la sortie inverse Q* du flip-flop 8.

Le dispositif 1 comporte encore un circuit détecteur 22 ayant une entrée 22a qui est reliée à la sortie de l'amplificateur 4 et qui reçoit donc le signal SM représentatif du courant qui circule encore dans la bobine 3 après qu'elle a été mise en court-circuit à la fin de chaque impulsion motrice.

L'homme du métier sait bien que lorsque la bobine d'un moteur pas à pas est mise en court-circuit après une impulsion motrice, la variation du courant qui passe encore dans cette bobine est différente selon que le rotor de ce moteur a tourné correctement, ou non, en réponse à cette impulsion motrice. L'homme du métier connaît également les diverses manières d'analyser les différences de cette variation et de produire un signal de détection représentatif de la rotation ou de la non-rotation du rotor.

Le détecteur 22 ne sera donc pas décrit en détail ici. On mentionnera simplement que, dans le présent exemple, le détecteur 22 comporte deux sorties 22b et 22c et qu'il est agencé de manière que le signal de détection qu'il produit après chaque impulsion motrice soit constitué par une brève impulsion apparaissant à cette sortie 22b ou à cette sortie 22c selon que le rotor du moteur 2 a tourné correctement ou non en réponse à cette impulsion motrice.

Les sorties 22b et 22c du détecteur 22 sont reliées aux deuxièmes entrées des portes 18 et 20 et, respectivement, aux deuxièmes entrées des portes 19 et 21.

Le dispositif 1 comporte encore un générateur d'impulsions 23 ayant une sortie 23a reliée à la deuxième entrée de la porte 7 et une entrée 23b reliée à la sortie 22c du détecteur 22.

Le générateur 23, qui ne sera pas décrit en détail car sa réalisation ne pose aucun problème à l'homme du métier, est agencé de manière à répondre à chaque impulsion qu'il reçoit sur son entrée 23b en produisant à sa sortie 23a une autre impulsion ayant une durée relativement longue.

Comme cela sera rendu évident plus loin, cette durée est celle que doit avoir l'impulsion de rattrapage qui est appliquée à la bobine 3 chaque fois que le rotor du moteur 2 n'a pas tourné correctement en réponse à une impulsion motrice et qui est destinée à faire exécuter à ce rotor le pas qu'il vient de rater. Cette durée est donc supérieure à celle de la plus longue des impulsions motrices appliquées à la bobine 3 mais ne peut pas être mieux précisée ici car elle dépend de plusieurs facteurs qui peuvent être différents selon les cas.

Le fonctionnement du dispositif 1 ne sera pas décrit dans tous ses détails car l'homme du métier n'aura aucune difficulté à le comprendre au vu des explications qui ont été données ci-dessus.

On relèvera simplement que chaque impulsion du signal ST1 produit par la base de temps 9 provoque un changement de l'état logique des sorties Q et Q* du flip-flop 8.

Simultanément, cette impulsion du signal ST1 provoque le passage de la sortie Q du flip-flop 10 à l'état "1". Il en résulte que l'entrée 4c ou l'entrée 4d de l'amplificateur 4 passe alors à l'état "1" selon que c'est la sortie Q ou la sortie Q* du flip-flop 8 qui a passé à l'état "1". L'amplificateur 4 commence donc à appliquer à la bobine 3 une impulsion motrice qui est positive dans le premier cas et négative dans le deuxième cas. En outre, toujours selon que c'est la sortie Q ou la sortie Q* du flip-flop 8 qui a passé à l'état "1", c'est le nombre binaire B2 présent aux sorties 16a à 16c du compteur 16 ou le nombre binaire B3 présent aux sorties 17a à 17c du compteur 17 qui est appliqué aux entrées 14d à 14f du comparateur 14 par l'intermédiaire du commutateur 15 dont l'entrée E est à l'état "0" dans le premier cas et à l'état "1" dans le deuxième cas.

En d'autres termes, les entrées 14d à 14f du comparateur 14 reçoivent le nombre binaire B2 ou le nombre binaire B3 selon que l'impulsion motrice appliquée à la bobine 3 par l'amplificateur 4 est positive ou négative.

Le passage de la sortie Q du flip-flop 10 à l'état "1" permet en outre au compteur 12 de commencer à compter les impulsions du signal ST2 qu'il reçoit alors sur son entrée Cl par l'intermédiaire de la porte 11. Le nombre binaire B1, qui était auparavant égal à 000 puisque l'entrée R de ce compteur 12 était à l'état "1", commence donc à croître.

Lorsque ce nombre binaire B1 devient égal au nombre binaire B2 ou B3 présent aux entrées 14a à 14f du comparateur 14 comme on l'a expliqué ci-dessus, la sortie S de ce comparateur 14 passe à l'état "1". Il en résulte que la sortie Q du flip-flop 10 repasse à l'état "0", de même que l'entrée 4c ou l'entrée 4d de l'amplificateur 4 qui était jusque là à l'état "1". L'impulsion motrice qui avait commencé à être appliquée à la bobine 3 de la manière décrite ci-dessus est donc alors interrompue.

On voit que la durée de chaque impulsion motrice positive est déterminée par la valeur du nombre binaire B2 présent aux sorties 16a à 16c du compteur 16 pendant cette impulsion motrice positive. De même, la durée de chaque impulsion motrice négative est déterminée par la valeur du nombre binaire B3 présent aux sorties 17a à 17c du compteur 17 pendant cette impulsion motrice négative. Dans le présent exemple, ces durées peuvent donc varier de 3 fois à 7 fois la durée de la période du signal ST2, soit de 2,93 millisecondes environ à 6,84 millisecondes environ.

On sait que la quantité d'énergie électrique fournie à la bobine d'un moteur pas à pas pendant une impulsion motrice à tension constante, comme c'est le cas dans le présent exemple, dépend notamment de la durée de cette impulsion motrice. Dans le présent cas, la quantité d'énergie électrique fournie à la bobine 3 pendant une impulsion motrice positive ou pendant une impulsion motrice négative dépend donc du nombre binaire B2 ou, respectivement, du nombre binaire B3. Cette quantité d'énergie électrique ne peut pas être mieux précisée car elle dépend d'autres facteurs tels que la tension d'alimentation du moteur et les caractéristiques électriques de celui-ci. On peut simplement dire que cette quantité d'énergie électrique a une valeur minimale lorsque le nombre B2, respectivement B3, a sa valeur 011, et une valeur maximale lorsque ce nombre B2, respectivement B3, a sa valeur 111.

Si une impulsion motrice qui vient d'être interrompue de la manière évoquée ci-dessus a provoqué une rotation correcte du rotor du moteur 2, la sortie 22b du détecteur 22 produit une impulsion de détection, et cette dernière est transmise à l'entrée d'horloge Cl du compteur 16 ou du compteur 17 selon que cette impulsion motrice était positive ou négative, par l'intermédiaire de la porte 18 ou respectivement, de la porte 20. Le contenu de ce compteur 16 ou de ce compteur 17 est donc modifié, et, le cas échéant, le nombre binaire B2 ou le nombre binaire B3 est diminué d'une unité pour autant qu'il n'ait pas encore atteint sa valeur minimale 011.

Si l'impulsion motrice qui vient d'être interrompue n'a pas provoqué une rotation correcte du rotor du moteur 2, c'est la sortie 22c du détecteur 22 qui produit une impulsion de détection. Cette impulsion de détection provoque d'une part la fourniture, par la sortie 23a du générateur 23, d'une impulsion de longue durée, comme cela a été mentionné ci-dessus. Cette impulsion de longue durée entraîne à son tour l'application à la bobine 3, par l'amplificateur 4, d'une impulsion de rattrapage ayant la même longue durée et ayant la même polarité que l'impulsion motrice en réponse à laquelle le rotor du moteur 2 n'a pas tourné.

Cette même impulsion de détection est d'autre part transmise à l'entrée de remise à zéro R du compteur 16 ou du compteur 17, selon que cette dernière impulsion motrice était positive ou négative, par l'intermédiaire de la porte 19 ou, respectivement, de la porte 21.

Le nombre binaire B2 dans le premier cas, ou le nombre binaire B3, dans le deuxième cas, prend alors sa valeur maximale 111 sans que la valeur de l'autre nombre binaire ne soit modifiée.

On voit que les nombres binaires B2 et B3 sont modifiés, le cas échéant, indépendamment l'un de l'autre. Il en découle que les quantités d'énergie électrique fournies à la bobine 3 pendant les impulsions motrices positives et pendant les impulsions motrices négatives sont également modifiées, le cas échéant, indépendamment l'une de l'autre, contrairement à ce qui se passe lorsqu'un moteur pas à pas est commandé par un dispositif connu.

Plus précisément, et en d'autres termes, la rotation ou la non-rotation du rotor du moteur 2 en réponse à une impulsion motrice ayant une polarité déterminée, positive par exemple, n'influence que la quantité d'énergie électrique fournie à la bobine 3 pendant les impulsions motrices suivantes ayant la même polarité, mais n'a aucun effet sur la quantité d'énergie électrique fournie à la bobine 3 pendant les impulsions motrices suivantes ayant l'autre polarité, c'est-à-dire la polarité négative dans cet exemple.

Considérons, à titre d'exemple, un cas où les quantités d'énergie électrique fournies à la bobine 3 pendant les impulsions motrices positives et négatives ont toutes deux leurs valeurs minimales. Si le rotor du moteur 2 ne tourne alors pas correctement, pour une raison quelconque, en réponse à une impulsion motrice positive, par exemple, la quantité d'énergie électrique fournie à la bobine 3 pendant les impulsions motrices positives suivantes sera effectivement augmentée jusqu'à sa valeur maximale, mais la quantité d'énergie électrique fournie à cette bobine 3 pendant les impulsions motrices négatives suivantes ne sera pas modifiée. Cette dernière quantité d'énergie électrique gardera donc sa valeur minimale tant que le rotor du moteur 2 continuera à tourner correctement en réponse à ces impulsions motrices négatives.

On voit que la dissipation inutile d'énergie électrique qui se produit fréquemment lorsqu'un moteur pas à pas est commandé selon le procédé connu mis en oeuvre par un dispositif connu et qui est due au fait que, lorsque le rotor de ce moteur ne tourne pas en réponse à une impulsion motrice ayant une certaine polarité, la quantité d'énergie électrique fournie à la bobine de ce moteur pendant les impulsions motrices immédiatement suivantes ayant la polarité inverse est augmentée jusqu'à sa valeur maximale, est évitée lorsque ce moteur est commandé par un dispositif tel que le dispositif 1 décrit ci-dessus.

Il en découle que, toutes autres choses étant égales, la mise en oeuvre du procédé selon la présente invention par un dispositif tel que le dispositif 1 pour commander un moteur pas à pas permet d'augmenter la durée de vie de la source d'énergie électrique qui alimente l'appareil dont fait partie ce moteur, ou de diminuer le volume occupé par cette source, ce qui constitue un avantage important de ce procédé et de ce dispositif par rapport aux procédés et aux dispositifs connus.

Il est évident que de nombreuses autres formes d'exécution du dispositif selon la présente invention, mettant en oeuvre le même procédé et présentant les mêmes avantages que le dispositif 1 décrit ci-dessus, peuvent être réalisées sans pour autant sortir du cadre de cette invention.

Notamment, un dispositif selon la présente invention peut être réalisé sous la forme d'un micro-ordinateur programmé de manière adéquate et muni d'une interface capable de fournir à la bobine du moteur l'énergie électrique nécessaire pendant chaque impulsion motrice.

De même, un dispositif selon la présente invention peut être agencé de manière que les impulsions motrices qu'il produit soient des impulsions motrices à courant constant. L'homme du métier sait bien que, dans un tel cas, la quantité d'énergie électrique fournie à la bobine du moteur pendant chacune de ces impulsions motrices peut être modifiée en agissant sur l'intensité du courant qui passe alors dans cette bobine.

## Revendications

1. Procédé de commande d'un moteur pas à pas (2) ayant un rotor muni d'un aimant permanent, une bobine (3) et un stator pour coupler magnétiquement ladite bobine (3) et ledit aimant, comportant :
- l'application à ladite bobine (3) d'impulsions motrices successives ayant, en absence de pas manqué, alternativement une première polarité et une deuxième polarité opposée à ladite première polarité, et la fourniture d'une quantité d'énergie électrique déterminée à ladite bobine (3) pendant chacune desdites impulsions motrices;
- la détection, après chacune desdites impulsions motrices, de la rotation ou de la non-rotation dudit rotor en réponse à cette impulsion motrice;
- dans le cas de la détection d'une non-rotation du rotor, l'application d'une impulsion de rattrapage ayant la même polarité que l'impulsion motrice précédente en réponse à laquelle le rotor n'a pas tourné; et
- le réglage de ladite quantité d'énergie en dépendance de ladite détection;
**caractérisé par le fait que** ledit réglage est effectué séparément pour lesdites impulsions motrices ayant ladite première polarité et pour lesdites impulsions motrices ayant ladite deuxième polarité.

2. Dispositif de commande d'un moteur pas à pas (2) ayant un rotor muni d'un aimant permanent, une bobine (3) et un stator pour coupler magnétiquement ladite bobine (3) et ledit aimant, ledit dispositif comportant :
- des moyens générateurs d'impulsions motrices (4 à 9) pour appliquer à ladite bobine (3) des impulsions motrices successives ayante, l'absence de pas manqué, alternativement une première polarité et une deuxième polarité opposée à ladite première polarité et pour fournir à ladite bobine (3) une quantité d'énergie électrique déterminée pendant chacune desdites impulsions motrices;
- des moyens de détection (22) pour fournir, après chacune desdites impulsions motrices, un signal de détection représentatif de la rotation ou de la non-rotation dudit rotor en réponse à cette impulsion motrice;
- des moyens de réglage (10 à 21) répondant audit signal de détection pour régler ladite quantité d'énergie électrique; et
- des moyens de commande pour fournir, dans le cas d'une détection de non-rotation dudit rotor, une impulsion de rattrapage ayant la même polarité que l'impulsion motrice précédente en réponse à laquelle le rotor n'a pas tourné ;
**caractérisé par le fait que** lesdits moyens de réglage (10 à 21) sont agencés de manière à régler ladite quantité d'énergie séparément pour lesdites impulsions motrices ayant ladite première polarité et pour lesdites impulsions motrices ayant ladite deuxième polarité.

3. Dispositif selon la revendication 2, **caractérisé par le fait que** lesdits moyens générateurs (4 à 9) comportent :
- des moyens (8, 9) pour produire un signal alternatif ayant alternativement un premier et un deuxième état; et
- des moyens formateurs (4 à 6) répondant audit premier état et audit deuxième état dudit signal alternatif pour appliquer à ladite bobine (3) lesdites impulsions motrices ayant ladite première et, respectivement, ladite deuxième polarité et répondant à un signal de détermination pour déterminer ladite quantité d'énergie;
et **par le fait que** lesdits moyens de réglage (10 à 21) comportent :
- des moyens de détermination (10 à 14) ayant une entrée (14d à 14f) et agencés pour produire ledit signal de détermination en réponse à un signal d'information appliqué à ladite entrée (14d à 14f);
- des premiers moyens de mémorisation (16, 18, 19) pour mémoriser un premier signal mémorisé (B2) et répondant audit signal de détection et audit premier état dudit signal alternatif pour modifier ledit premier signal mémorisé (B2);
- des deuxièmes moyens de mémorisation (17, 20, 21) pour mémoriser un deuxième signal mémorisé (B3) répondant audit signal de détection et audit deuxième état dudit signal alternatif pour modifier ledit deuxième signal mémorisé (B3); et
- des moyens de commutation (15) répondant audit premier état et audit deuxième état dudit signal alternatif pour appliquer à ladite entrée (14d à 14f) ledit premier signal mémorisé (B2), qui constitue alors ledit signal d'information, et respectivement ledit deuxième signal mémorisé (B3), qui constitue alors ledit signal d'information;
ladite quantité d'énergie étant ainsi déterminée par ledit premier signal mémorisé (B2) pendant les impulsions motrices ayant ladite première polarité et par ledit deuxième signal mémorisé (B3) pendant les impulsions motrices ayant ladite deuxième polarité.

## Claims

1. Method for controlling a stepping motor (2) having a rotor provided with a permanent magnet, a coil (3) and a stator for magnetically coupling said coil (3) and said magnet, including:
- application to said coil (3) of successive driving pulses having, in the absence of abortive step, alternately a first polarity and a second polarity opposite to said first polarity, and the supply of a determined quantity of electric energy to said coil (3) during each of said driving pulses;
- detection, after each of said driving pulses, of the rotation or non rotation of said rotor in response to said driving purse;
- in case of detection of a non rotation of the rotor, application of a recovering pulse with the same polarity than the prior driving pulse in response to which the rotor does not rotate; and
- adjustment of said quantity of energy as a function of said detection;
**characterised in that** said adjustment is effected separately for said driving pulses having said first polarity and for said driving pulses having said second polarity.

2. Devise for controlling a stepping motor (2) having a rotor provided with a permanent magnet, a coil (3) and a stator for magnetically coupling said coil (3) and said magnet, said device including:
- means (4 to 9) for generating driving pulses for applying to said coil (3) successive driving pulses having, in the absence of abortive step, alternately a first polarity and a second polarity opposite to said first polarity and for supplying said coil (3) with a determined quantity of energy during each of said driving pulses;
- detection means (22) for supplying, after each of said driving pulses, a detection signal representative of the rotation or non rotation of said rotor in response to said driving pulse;
- adjustment means (10 to 21) responding to said detection signal to adjust said quantity of electric energy; and
- control means for providing, in case of detection of a non rotation of the rotor, application of a recovering pulse with the same polarity than the prior driving pulse in response to which the rotor does not rotate;
**characterised in that** said adjustment means (10 to 21) are arranged so as to adjust said quantity of energy separately for said driving pulses having said first polarity and for said driving pulses having said second polarity.

3. Devise according to claim 2, **characterised in that** said generator means (4 to 9) include:
- means (8, 9) for generating an alternating signal having alternately a first state and a second state,
- shaping means (4 to 6) responding to said first state and to said second state of said alternating signal to apply to said coil (3) said driving pulses having said first polarity and, respectively, said second polarity and responding to a determination signal for determining said quantity of energy; and **in that** said adjustment means (10 to 21) include:
- determining means (10 to 14) having an input (14d to 14f) and arranged for generating said determination signal in response to a data signal applied to said input (14d to 14f):
- first storage means (16, 18, 19) for storing a first stored signal (B2) and responding to said detection signal and to said first state of said alternating signal to modify said stored signal (B2);
- second storage means (17, 20, 21) for storing second stored signal (B3) responding to said detection signal and to said second state of said alternating signal to modify said second stored signal (B3); and
- switching means (15) responding to said first state and to said second state of said alternating signal to apply to said input (14d to 14f) said first stored signal (B2), which then constitutes said data signal, and respectively said second stored signal (B3), which then constitutes said data signal;
said quantity of energy being thus determined by said first stored signal (B2) during the driving pulses having said first polarity and by said second stored signal (B3) during the driving pulses having said second polarity.

## Patentansprüche

1. Verfahren zum Steuern eines Schrittmotors (2), der einen mit einem Permanentmagneten versehenen Rotor, eine Spule (3) und einen Stator, um die Spule (3) und den Magneten magnetisch zu koppeln, besitzt, das umfasst:
- Anlegen von aufeinander folgenden Antriebsimpulsen an die Spule (3), die bei Abwesenheit eines ausbleibenden Schrittes abwechselnd eine erste Polarität und eine zu dieser ersten Polarität entgegengesetzte zweite Polarität haben, und Liefern einer bestimmten Menge elektrischer Energie an die Spule (3) während jedes dieser Antriebsimpulse;
- nach jedem dieser Antriebsimpulse Detektieren der Drehung oder der Nichtdrehung des Motors in Reaktion auf diesen Antriebsimpuls;
- im Fall der Detektion einer Nichtdrehung des Rotors Anliegen eines Kompensationsimpulses, der die gleiche Polarität wie der vorhergehende Antriebsimpuls hat, in Reaktion worauf sich der Rotor nicht gedreht hat; und
- Regeln der Energiemenge in Abhängigkeit von der Detektion; **dadurch gekennzeichnet, dass** die Regelung getrennt für die Antriebsimpulse, die die erste Polarität haben, und für die Antriebsimpulse, die die zweite Polarität haben, ausgeführt wird.

2. Vorrichtung für die Steuerung eines Schrittmotors (2), der einen mit einem Permanentmagneten versehenen Rotor, eine Spule (3) und einen Stator, um die Spule (3) und den Magneten magnetisch zu koppeln, besitzt, wobei die Vorrichtung umfasst:
- Generatormittel für Antriebsimpulse (4 bis 9), um an die Spule (3) aufeinander folgende Antriebsimpulse anzulegen, die bei Fehlten eines ausbleibenden Schrittes abwechselnd eine erste Polarität und eine zu dieser ersten Polarität entgegengesetzte zweite Polarität haben, und um an die Spule (3) während jedes dieser Antriebsimpulse eine bestimmte Menge elektrischer Energie zu liefern;
- Detektionsmittel (22), um nach jedem dieser Antriebsimpulse ein Detektionssignal, das die Drehung oder die Nichtdrehung des Rotors repräsentiert, in Reaktion auf diesen Antriebsimpuls zu liefern;
- Regelungsmittel (10 bis 21), die in Reaktion auf das Detektionssignal die Menge elektrischer Energie regeln; und
- Steuermittel, um im Fall einer Detektion der Nichtdrehung des Rotors einen Kompensationsimpuls zu liefern, der die gleiche Polarität wie der vorhergehende Antriebsimpuls hat, in Reaktion worauf sich der Rotor nicht gedreht hat;
**dadurch gekennzeichnet, dass** die Regelungsmittel (10 bis 21) dazu ausgelegt sind, die Energiemenge getrennt für die Antriebsimpulse mit der ersten Polarität und für die Antriebsimpulse mit der zweiten Polarität zu regeln.

3. Vorrichtung nach Anspruch 2, **dadurch gekennzeichnet, dass** die Generatormittel (4 bis 9) umfassen:
- Mittel (8, 9), um ein Wechselsignal zu erzeugen, das abwechselnd einen ersten und einen zweiten Zustand hat; und
Formgebungsmittel (4 bis 6), die in Reaktion auf den ersten Zustand und auf den zweiten Zustand des Wechselsignals an die Spule (3) die Antriebsimpulse anlegen, die die erste bzw. die zweite Polarität haben, und in Reaktion auf ein Bestimmungssignal die Energiemenge bestimmen;
und **dadurch**, dass die Regelungsmittel (10 bis 21) umfassen:
- Bestimmungsmittel (10 bis 14), die einen Eingang (14d bis 14f) besitzen und dazu ausgelegt sind, das Bestimmurigssignal in Reaktion auf ein Informationssignal, das in den Eingang (14d bis 14f) eingegeben wird, zu erzeugen;
- erste Speichermittel (16, 18, 19), um ein erstes gespeichertes Signal (B2) zu speichern und um in Reaktion auf das Detektionssignal und auf den ersten Zustand des Wechselsignals das erste gespeicherte Signal (B2) zu modifizieren;
- zweite Speichermittel (17, 20, 21), um ein zweites gespeichertes Signal (B3) zu speichern und um in Reaktion auf das Detektionssignal und auf den zweiten Zustand des Wechselsignals das zweite gespeicherte Signal (B3) zu modifizieren; und
- Umschaltmittel (15), um in Reaktion auf den ersten Zustand und auf den zweiten Zustand des Wechselsignals in den Eingang (14d bis 14f) das erste gespeicherte Signal (B2), das dann das Informationssignal bildet, bzw. das zweite gespeicherte Signal (B3), das dann das Informationssignal bildet, einzugeben;
wodurch die Energiemenge durch das erste gespeicherte Signal (B2) während der Antriebsimpulse, die die erste Polarität haben, und durch das zweite gespeicherte Signal (B3) während der Antriebsimpulse, die die zweite Polarität haben, bestimmt wird.
